# EUROPEAN PATENT APPLICATION

(11) **EP 1 331 708 A1**
(43) Date of publication of application: **30.07.2003**
(21) Application number: 02290172.2
(22) Date of filing: 24.01.2002
(51) Int. Cl.: H01S 3/30

(54) **Laser, optical amplifiers, and methods of obtaining laser light and amplifying optical signals**

(71) Applicant: Corning Incorporated, Corning, New York 14831 (US)
(72) Inventor: Cotteverte, Jean-Charles, Montreal H3N 1R2 (CA); Traynor, Nicholas James, 77300 Fontainbleau (FR)
(74) Representative: Poole, Michael John

(57) **Abstract**

A Raman laser comprises a laser cavity containing Raman-active medium, an optical pump coupled to the laser cavity, and a single wavelength-selective element in the cavity for promoting lasing at plural wavelengths corresponding to the at least the first four Raman shifts. The cavity preferably has a ring topology and the selective element is then to be transparent at the lasing wavelengths. For pumping an S-band amplifier using germanium-doped silica as the active medium, the selective element is preferably transparent at the pump wavelength and the first five Raman wavelengths.

The wavelength-selective element is preferably a Fabry-Perot etalon with a free spectral range corresponding to the Raman shift.

Two ways of ensuring unidirectional laser output are described, and the laser may be used to pump an optical amplifier, most especially a fibre Raman amplifier.

## Description

This invention relates to lasers and optical amplifiers and to methods of obtaining laser light and amplifying optical signals, primarily in the fields of optical communications and optical data processing.

Raman amplifiers have a number of attractive features for use in these fields, in particular that they can have high gain over a broad frequency band, but this depends on providing adequate pump energy at the appropriate wavelength. In particular, if they are to be compatible with the "span" lengths of existing fibre optic telecommunication systems, a pump power of at least 1W is needed. This is just about achievable by a semiconductor diode laser in the laboratory, but is a long way from commercial practice, and the best practical option at present available is to multiplex in various ways the output from a number of separate semiconductor laser diodes.

It has been recognised that Raman amplifiers are potentially capable of much higher power output than diode lasers, but this is not easily achieved with convenient active materials at the frequencies of interest for communications applications, in particular. For example, an amplifier for the S-band of the infra-red optical communications spectrum requires a pump wavelength of about 1380 to 1400 nm, and if this is to be derived from a 1062 nm Yb-doped double-clad fibre laser using Ge-doped silica Raman gain fibre, then five successive Raman shifts of 434 cm⁻¹ (13 THz) each are required, so that the Raman laser must be active at five different wavelengths. In principle, this could be achieved using five pairs of fibre Bragg gratings to define the lasing wavelengths, but such a construction may have poor energy efficiency because of unwanted reflections. In addition, it has been shown that UV exposure used to write gratings can induce a small transmission loss, and this can significantly reduce the efficiency of a laser in which light has to pass through many gratings.

Nielsen et al have described in IEEE Photonics Technology Letters vol 10 no.10, October 1998 a partial solution to this problem using a circular Raman laser/Raman amplifier topology, but this still requires three in-cavity Bragg gratings in an embodiment for use in the band around 1300 nm; we estimate that extension of this technique to the "S" band around 1500 nm would require at least two and probably three pairs of additional gratings to define additional lasing wavelengths.

In accordance with one aspect of the invention, a Raman laser comprises a laser cavity containing Raman-active medium, an optical pump coupled to the laser cavity, and means for promoting lasing at plural wavelengths (hereinafter called the "Raman wavelengths") corresponding to the first and successive Raman shifts in the said medium and is *characterised in that* the said means is a single wavelength-selective element in the cavity and selects at least four periodically related wavelengths, being the first four Raman wavelengths.

For operation in the S band using a typical germano-silicate Raman-active fibre, we expect that five such wavelengths will need to be selected.

It is possible to use a linear laser cavity, either with a wavelength-selective reflector that reflects at the Raman wavelengths defining at least one of the cavity ends or with a wavelength-selective transmission element that is transparent at the Raman wavelengths between reflectors defining the cavity ends. We much prefer, however, to use a cavity with ring topology with a selective transmission element that is transparent at the Raman wavelengths, and preferably also at the pump wavelength.

Preferably the wavelength-selective element is a Fabry-Perot etalon with a free spectral range corresponding to the Raman shift of the medium. The design of such etalons, typically by precision multi-coating, to achieve desired transmission (or reflection) wavelengths and free spectral range is well understood and does not need to be detailed in this application.

Preferably the laser includes a filter to absorb wavelengths corresponding to Raman orders beyond that of the desired output wavelength, in order that they shall not give rise to interactions that may consume pump energy; or alternatively an angled wavelength-selective reflector might be used to remove such undesired wavelengths from the cavity.

In the preferred ring topology, laser radiation will unless prevented propagate in both directions. This is not a problem at the intermediate Raman wavelengths, but is inconvenient at the output wavelength, unless dual outputs are desired (say to pump two amplifiers simultaneously or to pump a fibre amplifier from both of its ends). Preferably bi-directional propagation is prevented by using a wavelength-division multiplexor/demultiplexor pair to separate radiation at the output frequency into a bypass route and including in that route an optical isolator so that the bypass route is accessible in one direction only. Alternatively, a wavelength-division multiplexor coupler and reflector may be used to intercept and reverse radiation at the output wavelength that is propagating in the direction away from the desired output.

The invention also provides an optical amplifier comprising an optical cavity containing an optically active species capable of population inversion, an optical pump for producing population inversion in that species, and means for passing an optical signal through the optical cavity, characterised in that the pump is a laser in accordance with the invention.

Preferably the active species is Raman-active.

Preferably the cavity is a fibre cavity, and in such case, the amplifier may also function as a transmission fibre.
The invention also includes a method of obtaining laser light which comprises providing a laser cavity containing Raman-active medium and an optical pump coupled to the laser cavity, and promoting lasing at plural Raman-shifted wavelengths by inserting in the cavity a wavelength-selective element that selects at least four periodically-related wavelengths, being the first four Raman wavelengths.

The invention further includes a method of amplifying an optical signal comprising passing the signal through a cavity containing an optically active material capable of population inversion, and obtaining such population inversion by pumping with laser radiation obtained by the method of the invention.

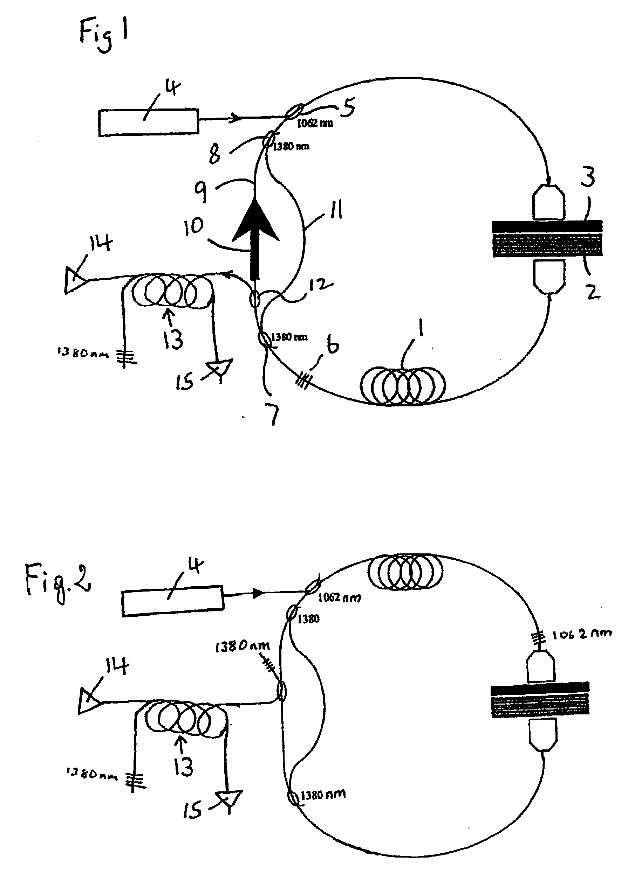

The invention will be further described, by way of example, with reference to the accompanying drawings in which each of Figures 1 and 2 is a diagrammatic representation of one form of laser-amplifier in accordance with the invention.

The Raman laser of figure 1 comprises a fibre loop cavity formed predominantly by a length of Ge-doped silica fibre 1, which is Raman-active with a shift of 434 cm⁻¹ (or in frequency terms, 13THz). Into the loop is inserted a selective reflector in the form of a Fabry-Perot etalon 2 designed to have a free spectral range of 434 cm⁻¹ and one of its transmission maxima at 1062 nm. It is thus transparent at the pump wavelength and at many of the Raman wavelengths of the system, including at least the first 5 Raman wavelengths, but has transmission minima between each adjacent pair of these wavelengths to prevent (or at least minimise) any possible laser action at undesirable wavelengths.

Also inserted in the loop is a filter 3 that is transparent at wavelengths in the approximate range from 1062 to 1400 nm, but absorbs radiation with longer wavelengths, which will mainly be Raman radiation of the 6th order or higher.

Pump radiation at 1062 nm from a source laser 4 (for instance a Yb-doped double-clad fibre laser) is efficiently coupled into the loop using a 1062 nm wavelength-division multiplexor 5. As shown, this is of the micro-optic filter type, with three arms only, and in this case a Bragg grating 6 tuned to that wavelength is preferably provided in the main fibre loop to reflect pump radiation and so improve its utilisation. Alternatively, it is possible to use a 4-arm multiplexor with a 1062 nm reflecting Bragg grating on its fourth arm.

The loop is split and recombined by a pair of wavelength-division multiplexor/demultiplexors 7 and 8 so that radiation of the 5th Raman order, that is at 1380 nm, is directed to the bypass route 9 in which an optical isolator 10 allows radiation to pass only in the clockwise direction, while all other relevant wavelengths (that is at least the pump radiation and the first to fourth Raman orders) are directed to the main route 11 in which they pass freely in either direction.

Laser light output is taken from a power splitter 12, preferably located, as shown, on the route 8 where only the output wavelength is present at any substantial level.

For the purpose of illustration, the output of the laser is shown as being used to pump a counter-propagating Raman fibre laser 13 which receives an optical signal from source 14 and outputs it in amplified form to receiving apparatus 15.

The alternative form of the invention shown in figure 2 is essentially the same, except that the output laser radiation is taken from the loop in a direction counter to the pump direction by a 1380 nm multiplexor 16 having in its fourth arm a Bragg grating 17 tuned to that wavelength, which receives output-wavelength radiation that may be propagating in the anticlockwise direction and returns it in a clockwise direction from which it is able to reach the output. The isolator (10, Figure 1) is thus made unnecessary. The doped fibre 1 is re-positioned so that gain still occurs as close as practicable to the output of the laser.

*Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so, with the exception of the design and manufacture of etalons.*

## Claims

1. A Raman laser comprising a laser cavity containing Raman-active medium, an optical pump coupled to the laser cavity, and means for promoting lasing at plural wavelengths ("the Raman wavelengths") corresponding to the first and successive Raman shifts in the said medium ***characterised in that*** the said means is a single wavelength-selective element in the cavity and selects at least four periodically-related wavelengths, being the first four Raman wavelengths.

2. A Raman laser as claimed in claim 1 in which the said cavity has a ring topology and the selective element is a selective transmission element that is transparent at the Raman wavelengths.

3. A Raman laser as claimed in claim 1 or claim 2 in which the selective transmission element is transparent at the first five Raman wavelengths and at the pump wavelength.

4. A Raman laser as claimed in any one of claims 1-3 comprising a wavelength-division multiplexor/demultiplexor pair effective to separate radiation at output frequency into a bypass route and including in that route an optical isolator so that the bypass route is accessible in one direction only.

5. A Raman laser as claimed in any one of claims 1-3 in which a wavelength-division multiplexor coupler and reflector is set to intercept and reverse radiation at the output wavelength that is propagating in the direction away from the desired output.

6. A Raman laser as claimed in any one of claims 1-5 in which the wavelength-selective reflector is a Fabry-Perot etalon with a free spectral range corresponding to the Raman shift of the medium.

7. A Raman laser as claimed in any one of claims 1-6 including a filter to absorb wavelengths corresponding to Raman orders beyond that of the desired output wavelength.

8. An optical amplifier comprising an optical cavity containing an optically active species capable of population inversion, an optical pump for producing population inversion in that species, and means for passing an optical signal through the optical cavity, **characterised in that** the pump is a laser in accordance with any one of claims 1-7.

9. An optical amplifier as claimed in claim 8 in which the active species is Raman-active.

10. An optical amplifier as claimed in claim 9 in which the cavity is a fibre cavity and the amplifier also functions as a transmission fibre.

11. A method of obtaining laser light which comprises providing a laser cavity containing Raman-active medium and an optical pump coupled to the laser cavity, and promoting lasing at plural Raman-shifted wavelengths by inserting in the cavity a wavelength-selective element that selects at least four periodically-related wavelengths, being the first four Raman wavelengths.

12. A method as claimed in claim 11 in which the said cavity has a ring topology and the selective element is a selective transmission element that is transparent at the Raman-shifted wavelengths.

13. A method as claimed in claim 11 or claim 12 comprising using a selective transmission element that is transparent at the first five Raman wavelengths and at the pump wavelength.

14. A method as claimed in any one of claims 11-13 comprising using a wavelength-division multiplexor/demultiplexor pair to separate radiation at output frequency into a bypass route and including in that route an optical isolator so that said radiation may traverse the bypass route in one direction only.

15. A method as claimed in any one of claims 11-14 comprising using a wavelength-division multiplexor coupler and reflector to intercept and reverse radiation at the output wavelength that is propagating in the direction away from the desired output.

16. A method as claimed in any one of claims 11-15 comprising using as the wavelength-selective element a Fabry-Perot etalon with a free spectral range corresponding to the Raman shift of the medium.

17. A method as claimed in any one of claims 11-16 comprising including a filter to absorb wavelengths corresponding to Raman orders beyond that of the desired output wavelength.

18. A method of amplifying an optical signal comprising passing the signal through a cavity containing an optically active material capable of population inversion, and obtaining such population inversion by pumping with laser radiation obtained by the method claimed in any one of claims 11-17.

19. A method as claimed in claim 118 comprising using as the said optically active material one that is Raman-active.

20. An method as claimed in claim 19 in which the cavity is a fibre cavity comprising using the amplifier also as a transmission fibre.

21. A laser substantially as described with reference to Figure 1.

22. A laser substantially as described with reference to Figure 2.

23. An optical amplifier substantially as described with reference to Figure 1.

24. An optical amplifier substantially as described with reference to Figure 2.

25. A method of generating laser radiation substantially as described with reference to Figure 1.

26. A method of generating laser radiation substantially as described with reference to Figure 2.

27. A method of amplifying an optical signal substantially as described with reference to Figure 1.

28. A method of amplifying an optical signal substantially as described with reference to Figure 2.
